# EUROPEAN PATENT APPLICATION

(11) **EP 3 208 596 A1**
(43) Date of publication of application: **23.08.2017**
(21) Application number: 16156751.6
(22) Date of filing: 22.02.2016
(51) Int. Cl.: G01N 1/28, B21B 1/22, B21B 38/00, B21B 45/04, B21B 45/06, B24B 7/00, B24B 7/06, B24B 7/07, B24B 7/13, B24B 29/06, B24B 7/12, B24B 7/24

(54) **DEVICE FOR DETECTION OF DEFECTS IN STRIPS**

(71) Applicant: Cockerill Maintenance & Ingenierie S.A., 4100 Seraing (BE)
(72) Inventor: DUBOIS, Michel, 4100 Boncelles (BE)
(74) Representative: Pronovem

(57) **Abstract**

The present invention relates to a stoning or honing device for automatically applying an essentially constant and uniform pressure of an abrasive hard component onto a continuously moving metal strip (6) surface, for the purpose of defect visual inspection, comprising :
- a main frame (1) supporting at least one carriage (4) bearing a hard component (5), said carriage (4) being connected to a drive system (2) for moving the hard component (5) towards the metal strip surface (6) and for applying a controlled contact pressure thereof on the strip (6) ;
- a means for moving transversally and back and forth at a defined speed the hart component bearing carriage (4) about the continuous motion direction of the strip (6) ;
wherein the device comprises, on each strip side, a plurality of hard component bearing carriages (4) having each a defined width stroke and arranged at different locations with respect to the travel direction and/or the transverse direction of the strip (6), so that a hard component bearing carriage (4) located on one side of the strip (6) has a corresponding carriage (4) disposed opposite on the other side of the strip and so that both carriages (4) are moved synchronously.

## Description

### Field of the Invention

The present invention relates to industrial stoning (or honing) device and process intended to enlighten defects on strips in the frame of a visual inspection. In metalworking, stoning or honing is machining a surface by scrubbing an abrasive stone against it.

The device and process of the invention are particularly intended to continuous production lines in which the time available for stoning is very limited.

### Background of the Invention and Prior Art

The validation of the quality of a surface, especially in case of exposed automotive steel sheets, requires specific procedures to highlight possible defects (roll marks, slivers, dents, small dross, jet lines, oxidation, etc.). The current and well-known practice, named stoning procedure, consists in sliding or scrubbing a flat stone with a defined pressure on the sheet surface. In this operation, all the parts which are either over or below the average surface are wiped with a different pressure from the rest, leading to a different brightness. Therefore, visual detection is made much easier thanks to this variation of contrast when the surface in under correct lightning.

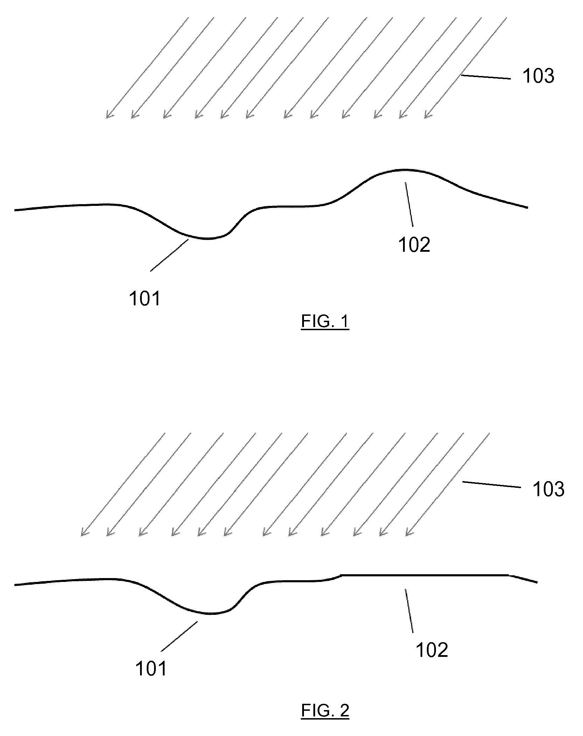

An example of the effect of stone wiping is shown in Fig. 1 and Fig. 2. Fig. 1 refers to an initial surface which comprises depressions 101 and bumps 102. When this surface is enlightened, its aspect appears quite uniform. During the stoning procedure in which the dimensions of the stone are much higher than the distance between the bumps and depressions as well as much higher than the size of the bumps and depressions, the bumps will be abraded with possible formation of a lot of scratches whereas the depressions will not be touched or attained by the stone. Therefore, when this surface is put under suitable lighting, reflection of the incident light rays 103 will lead to a variation in the brightness of the surface. Typically, the abraded bumps 102 will appear more dull that the average surface whereas the depressions will be brighter.

It is also well-known that in steel processing and especially in continuous galvanizing lines, the defect sources are numerous and can be present on either side of a steel sheet. Among the various defect sources, the presence of dirt or uneven surface on a deflector roll of the processing line is known to make small depressions in the surface by a drawing effect of the uneven roll surface. The specificity of such a defect is to be periodical. When the distance between two successive identical defects can be measured, the roll diameter responsible thereof can easily be identified. Therefore, the stoning procedure as described here above must be performed not only on the full width of the steel sheet that can be as high as 2 meters but also on a length that corresponds to at least the biggest roll circumference in the processing line, which means about 5 meters in practice for the current line technology.

Current practice is to run the stoning procedure at the most for every coil but sometimes less often, this depending on the customer requirements. It should also be performed on each side of the product at least for the most critical surfaces.

The operation is classically made manually by an operator on the non-moving or stopped strip in an inspection stand. This implies that in addition to a significant surface to be wiped with the stone (typically 5 to 10 square meters on each side), available time is limited owing to a limited available amount of strip length in the looper before the inspection stand which has to keep the process speed constant when the strip is stopped for inspection. In practice and depending on line design, available time is around 1 minute.

The manual operation of prior art is known to have a lot of drawbacks :
- quite painful operation for the operator in charge of it ;
- non-reproducible procedure from coil to coil ;
- no available measure of the contact pressure whereas it is known that the pressure applied by the stone on the surface reveals more or less the defects ;
- safety issues since the operator is in contact with the strip that may accidentally move ;
- impossibility to stone both sides of the strip in the available time with a single operator;
- difficulty for an operator to stone the full width of the strip of a 2 meter wide material when the pass line is in horizontal position. This is due to the difficulty to wipe with the stone from edge to edge due to limited arm length of human operators.
Therefore, it turns obvious that an automatic system would be strongly beneficial since all the above-mentioned problems could be solved therewith.

Document KR 2003-0077104 A discloses an apparatus for inspecting the surface of steel sheet, provided to simply and accurately inspect fine roll marks and foreign matter marks transferred onto the surface of the steel sheet by wiping the steel sheet so that roughness is formed on the surface of the steel sheet when proceeding the steel sheet in a direction from uncoiler. This apparatus comprises a sand block which is capable to move back and forth in a transversal direction of the strip with a homogenous pressure of the hard component applied to the strip supported by a roll system. This apparatus is not suited to be used in strip lines of arbitrary width.

Document WO 2010/049596 A1 describes a method and device for honing a suspended portion of at least one side of a metal strip of arbitrary width and in continuous motion, allowing a honing that is free of artefacts and automated. The device comprises: a means of vertically positioning an abrasive element at the surface of the said strip, a means of horizontally moving the abrasive element transversely to the motion of the strip, said means being couplable to the vertical-positioning means and able to move back and forth from one edge of the strip to the other, a first means allowing uniform pressure to be applied to a suspended portion of strip in motion and being coupled to a second means that allows said pressure to be adjusted according to the longitudinal tension of the suspended portion of strip.

As the surface of stoning is generally chosen so as to cover the maximum strip width and the longest cyclic defect length, for example the perimeter of the biggest cylinder, it hardly allows to stone more than 2-3 square meters using a single stone in the time allocated by the upstream strip accumulator.

Moreover the above technology does not permit to stone both strip sides. Further with uneven strips, scratches or damages in the stoned surface may occur due to the edges of the fixed stone.

At last correlating the transverse speed of the stone to the travel speed of the strip, as recommended in this document, is not suitable as the kinematics is only determined by the available time for honing. Furthermore adopting a speed which is too high is contrary to the currently admitted manual good practice.

### Aims of the Invention

The present invention aims to provide a stoning system and a stoning procedure allowing to automatically process, in a strip processing industrial line, and in a controlled manner, a determined surface area of a strip, on both sides thereof, during a determined time, either in vertical or in horizontal pass line.

The present invention also aims at providing a stoning machine which is not cumbersome.

### Brief Description of the Drawings

Figure 1, already mentioned, represents an unprocessed surface presenting depressions and bumps.
Figure 2, already mentioned, shows the surface of figure 1 modified by the stone wiping effect.
Figure 3 is a top view of the 3-stone system embodiment according to the invention.
Figure 4 is a side elevation view of the stone assembly with carriage and drive.
Figure 5 is a cross-sectional view of a preferred embodiment for a 2-side stoning system according to the invention with main frame and global drive system.

### Summary of the Invention

The present invention relates to a mechanical device or installation for stoning that can be easily implemented in the inspection section of continuous processing line for a strip and especially a steel strip. The invention also relates to a stoning procedure on both strip sides, both under control and in reproducible manner, in less than 2 minutes, preferably in less than 1 minute, for a total wiped surface being at least between 1 and 5 m² per side. The invention can however be used on only one side if required.

Stoning or honing consists here in sliding a hard material on a softer surface to enlighten some of the pre-existing defects of the surface by changing the light reflection thereof after the hard material has wiped the surface with defined pressure.

More specifically, a first aspect of the present invention relates to a stoning or honing device for automatically applying an essentially constant and uniform pressure of an abrasive hard component onto a continuously moving metal strip surface, for the purpose of defect visual inspection, comprising :
- a main frame supporting at least one carriage bearing a hard component, said carriage being connected to a drive system for moving the hard component towards the metal strip and for applying a controlled contact pressure thereof on the metal strip surface ;
- a means for moving transversally and back and forth at a defined speed the hart component bearing carriage with respect to the continuous motion direction of the strip ;
wherein the device comprises, on each strip side, a plurality of hard component bearing carriages having each a defined width stroke and arranged at different locations with respect to the travel direction and/or the transverse direction of the strip, so that each hard component bearing carriage located on one side of the strip has a corresponding carriage disposed opposite on the other side of the strip and so that both carriages are moved synchronously.

According to preferred embodiments, the device further comprises at least one of the following characteristics or a suitable combination thereof:
- the hard component is made of at least two parts of any suitable grinding surface such as stone, ceramic, abrasive polymer or emery paper, the different parts of the hard component having possibly not the same size or shape ;
- the device comprises from 2 to 5 hard components per side of the strip ;
- the carriage bearing a hard component is coupled to the drive system with a pivoting part allowing self-adjustment of the hard surface to the strip, preferably a ball joint, a spring suspension system or flexible rubber;
- the drive system for moving the hard component towards the metal strip surface and away thereof and for applying a controlled contact pressure on the strip surface is a screw jack, a hydraulic cylinder, a gas cylinder or a rack and pignon gear assembly ;
- the carriage is provided with a position or edge sensor ;
- the device is computer- or PLC-controlled ;
- the device has a size less than 2 meter in a strip travel direction, preferably less than 1 meter;
- the device comprising a main frame having a "C" or "O" shape having at least one main beam on each side of the strip to support the carriages with their hard components and drive systems ;
- at least one beam of the "C"-shaped or "O"-shaped main frame is arranged to be translated, rotated out of the strip pathline in a standby location of the device ;
- in case of "C"-shaped main frame, the beams are capable to be vertically rotated according to a "V"-opening ;
- the device can be arranged to stone a portion of metal strip in vertical run, in horizontal run or in oblique run ;
- the means for moving transversally and back and forth at a defined speed the hard component bearing carriages with respect to the continuous motion direction of the strip comprises screw balls or sliding rails ;
- the means for moving transversally and back and forth at a defined speed the hart component bearing carriage with respect to the continuous motion direction of the strip is arranged so as to permit each carriage to be driven separately, for example by using a belt, a tooth belt, a cable or a rack.

A second aspect of the present invention relates to a method for stoning or honing a metal strip surface continuously moving at low speed, for the purpose of defect visual inspection, using the device according to anyone of the preceding claims, comprising the steps of:
- decreasing the strip moving speed from a standard speed to a value comprised between 1 and 20 meter per minute and preferably between 10 and 15 meter per minute ;
- moving the main frame supporting the carriages from a standby position to a starting working position ;
- for each carriage, moving the hard components downwards to bring them into contact with the strip using the respective drive systems ;
- performing the stoning work by controllably moving the carriages transversally with respect to the strip movement, until a desired stoned portion of strip is obtained ;
- for each carriage, moving the hard components upwards to pull the hard component away of the strip using the respective drive systems ;
- moving the main frame supporting the carriages from the working position to the standby position ;
- possibly performing in standby position an automatic cleaning operation by wiping the hard components with a brush or unwoven material ;
- increasing again the strip moving speed to standard speed.

The device of the invention is less than 2 meters long and preferably less than 1 meter long, allowing an easy implementation in existing lines. It can be used on horizontal and vertical pass lines with a preference for vertical pass line.

The device is made of different parts as it will be explained in detail hereinafter, each part having a dedicated function in order to uniformly wipe a stone with a defined pressure across a strip moving slowly, typically between 1 and 20 meter per minute (mpm) but preferably, and in practice, between 10 and 15 mpm, to cover the total length of the strip to wipe according to the time made available by the exit looper and to the line speed of the processing section.

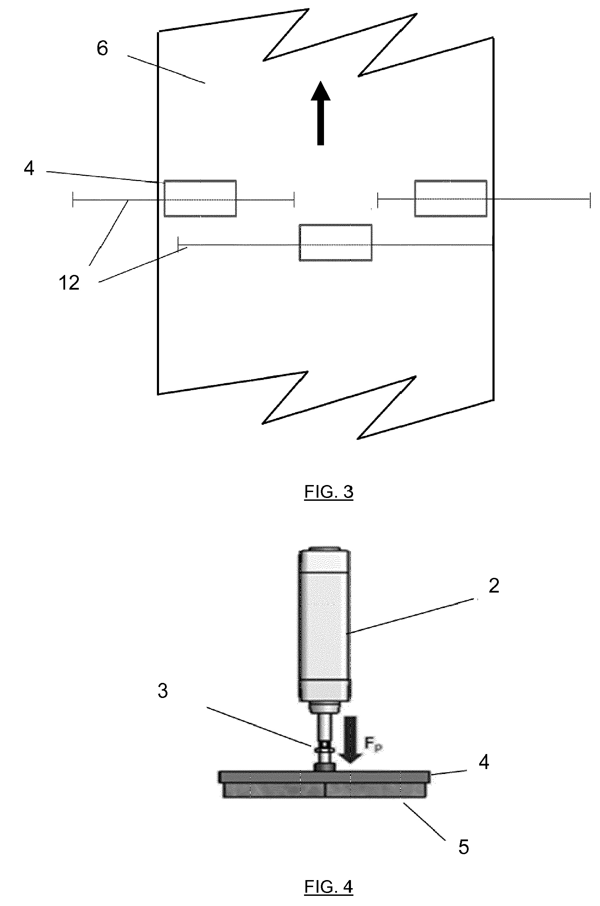

Stone assembly according to the invention is shown on Fig 4. Stone 5, that can be chosen by the user according to the requirements, will be fixed on a steel or aluminium plate, the carriage 4 connected to the shaft of an air cylinder 2 by means of a rotating device 3. If required, more than a single stone may be fixed on the plate 4 to cover the desired surface.

The air cylinder 2 performs the raising function to allow the stone coming over the strip without touching the strip edges and the rotating self-adjustment device 3 has the function to ensure that the stone will touch the strip on all its surface even if both the strip and cylinder are not perfectly perpendicular, a frequent situation that may be in relation with the strip flatness at this location. This also allows to avoid that an uneven strip be scratched by the edges of the stone(s). The pressure between the stone and the strip is ensured by an adjustable air-controlled system. This allows to change the contact pressure in agreement with specific user requirement or specific product to stone (effect of steel grade, thickness, etc.).

The automatic cleaning operation performed by wiping the hard components with a brush or unwoven material can also be made just before or after the stoning operation.

According to Fig. 3 and Fig. 4, the device of the invention has a main frame to support the complete equipment, 1 to 5, and preferably 2 to 3 stones 5 per side, a system to move the stones transversally 12 with regard to the line axis of each stone 5, fixed on carriage 4. A system 2, for example an air cylinder, is implemented to move the stone and its plateau up and down as well as to control the applied pressure between the strip and the stone.

The top and bottom stones with reference to both strip sides will face each other while synchronously travelling to avoid any strip deflection when pressure is applied. In that respect the present invention provides an alternative solution of WO 2010/049596 in case stoning is effected on a suspended portion of strip. In the latter case a special means was provided in order to apply variable pressure of the stoning elements as a function of the longitudinal strip tension.

### Description of Preferred Embodiments of the Invention

According to Fig. 3, the strip 6 is moving in the classical travel direction (see arrow) at a speed preferably between 10 and 15 mpm while the device of the invention may be used in a wider range, from 1 to 20 mpm. For example, the lower strip speed will be used when special surface examination must be performed. However, when such a low speed is used, it is not expected that the whole 5-meter long surface could be stoned owing to the currently available lines with classical processing strip speeds for steel sheet.

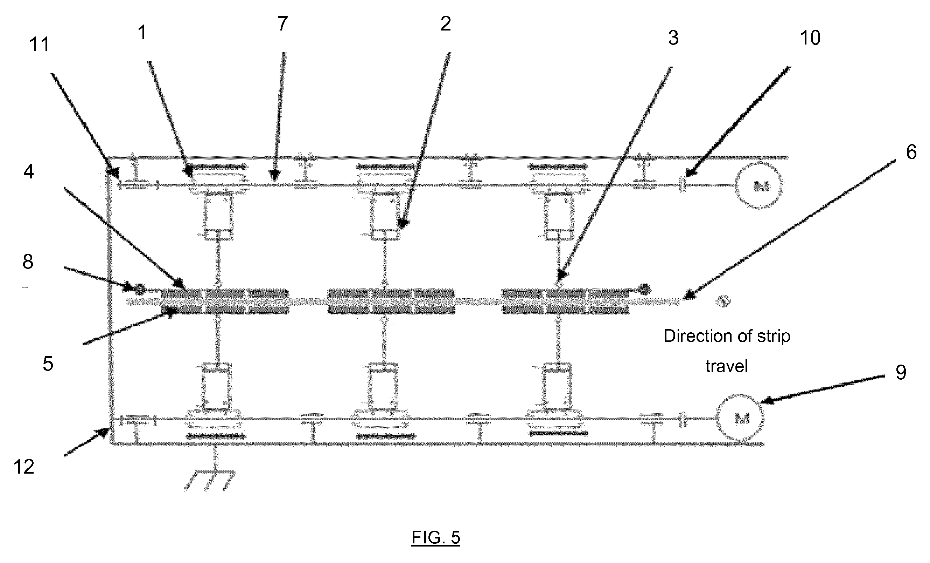

Main frame 1 supports the top and bottom stone assemblies with their travelling system. This main frame 1 can be either of "O" or "C" (see Figure 5) shape. In the "O" shape, in addition to the supporting beams parallel to the strip and located in front of each face of the strip respectively, there is a perpendicular beam connecting said parallel beams on each lateral edge, while, in the "C" shape, this perpendicular beam is only present on one edge of the strip. One or more parts of the main frame 1 are possibly moving. For example, at least one of the beams of main frame 1 may rotate or move, either horizontally or vertically, to increase the distance to the strip and/or make maintenance easier.

The assembly of cylinder 2, rotating device 3, carriage 4 and stone 5 is connected to a sliding rail 12. The carriages 4 are individually moved by a mechanical system like an electrical motor, an air cylinder or similar 9. The drive system has the suitable equipment to identify the carriage position all along its transversal movement.

As the total strip surface has to be covered, more than one carriage assembly with rail and drive has to be used for each strip side or face. The exact number, typically between 2 and 4, has to be determined in view of fulfilling the requirement in available time for operation which includes low strip speed, extent of surface to stone and travelling stone speed. According to the invention, it is advantageous to drive each carriage separately but always with synchronization of corresponding top and bottom stone assemblies.

An example of the invention device shown in Fig 5 is a device preferably dedicated to a galvanizing line processing for a 1850 mm-width strip with a maximum process speed of 180 mpm. The calculation has shown that a 3-stone assembly has to be installed on each strip side to make possible the stoning of 5 meters long at full (maximum) width in less than 1 minute while the strip is travelling in the device at a speed between 10 and 15 mpm. The stone assemblies can be advantageously arranged in quincunx (see Fig. 3), i.e. according to a repetitive arrangement of elements, line by line, wherein a line is shifted by the half of an element about the preceding or following line.

In this particular embodiment, three separate rails including drive and control system are used per side. The exact stroke of each stone will be adjusted according to the exact strip width to stone. For example, in this embodiment, the central stone assembly will have a stroke of 800 mm, while the two external stone assemblies will have each a stroke of 550 mm, with overlap between the aforementioned strokes.

Different types and sizes of stone can be used according to the invention. However, the stone size is typically between 10x100 mm to 100x200 mm. This is expected to be the best compromise between availability, weight, surface to cover and kinetic analysis of the equipment.

When the system is *not* used, the 3-stone assembly will advantageously be waiting on an end of the main frame, out of the strip pass line. This will allow, in safe condition for the operators, some cleaning and maintenance if required.

When applying the stoning procedure is desired, the line speed in this section will firstly and preferably be reduced to the target value of about 10-15 mpm. Then the stone carriages will be moved to their starting position in front of the strip. The stone are moved down to the strip on each strip side, and the contact pressure applied. The travelling movement of each carriage can now start. It is controlled by computer or similar, using a position sensor implemented in the drive system. After that the desired stoned length has been obtained, the stones are moved up, the line speed can be reincreased to the process speed as required. Finally, the stones move back to their standby location.

The stone assembly is made such that it can be easily replaced either during maintenance but also in operation. The main frame and further the whole system could possibly be designed in order to allow transversal move so that to put the whole system out of the line, for example by mounting the frame bearing the stoning equipment on guide rollers.

### Reference symbols

- 1: main frame
- 2: air cylinder
- 3: rotating device (ball joint)
- 4: carriage
- 5: stone
- 6: metal sheet
- 7: ball screw
- 8: edge sensor
- 9: motor
- 10: coupler
- 11: bearing
- 12: sliding rail
- 101: surface depression
- 102: surface bump
- 103: light rays

## Claims

1. A stoning or honing device for automatically applying an essentially constant and uniform pressure of an abrasive hard component onto a continuously moving metal strip (6) surface, for the purpose of defect visual inspection, comprising :
- a main frame (1) supporting at least one carriage (4) bearing a hard component (5), said carriage (4) being connected to a drive system (2) for moving the hard component (5) towards the metal strip (6) and for applying a controlled contact pressure thereof on the metal strip (6) surface ;
- a means for moving transversally and back and forth at a defined speed the hart component bearing carriage (4) with respect to the continuous motion direction of the strip (6) ;
wherein the device comprises, on each strip side, a plurality of hart component bearing carriages (4) having each a defined width stroke and arranged at different locations with respect to the travel direction and/or the transverse direction of the strip (6), so that each hard component bearing carriage (4) located on one side of the strip (6) has a corresponding carriage (4) disposed opposite on the other side of the strip and so that both carriages (4) are moved synchronously.

2. The stoning device of claim 1, wherein the hard component (5) is made of at least two parts of stone, ceramic, abrasive polymer or emery paper.

3. The stoning device of claim 1, wherein it comprises from 2 to 5 hard components (5) per side of the strip (6).

4. The stoning device of claim 1, wherein the carriage (4) bearing a hard component (5) is coupled to the drive system (2) with a pivoting part (3) allowing self-adjustment of the hard surface to the strip (6), preferably a ball joint, a spring suspension system or flexible rubber.

5. The stoning device of claim 1, wherein the drive system (2) for moving the hard component (5) towards the metal strip (6) surface and away thereof and for applying a controlled contact pressure on the strip surface is a screw jack, a hydraulic cylinder, a gas cylinder or a rack and pignon gear assembly.

6. The stoning device of claim 1, wherein the carriage (4) is provided with a position or edge sensor (8).

7. The stoning device of claim 1, wherein it is computer- or PLC-controlled.

8. The stoning device according to claim 1, wherein it has a size less than 2 meter in a strip travel direction, preferably less than 1 meter.

9. The stoning device according to claim 1, comprising a main frame (1) having a "C" or "O" shape having at least one main beam on each side of the strip to support the carriages (4) with their hard components (5) and drive systems (2).

10. The stoning device of claim 9, wherein at least one beam of the "C"-shaped or "O"-shaped main frame (1) is arranged to be translated or rotated out of the strip pathline in a standby location of the device.

11. The stoning device of claim 10, wherein, in case of "C"-shaped main frame (1), the beams are capable to be vertically rotated to achieve a "V"-opening.

12. The stoning device according to claim 1, wherein it can be arranged to stone a portion of metal strip in vertical run, in horizontal run or in oblique run.

13. The stoning device according to claim 1, wherein the means for moving transversally and back and forth at a defined speed the hart component bearing carriages (4) with respect to the continuous motion direction of the strip (6) comprises screw balls or sliding rails.

14. The stoning device according to claim 1, wherein the means for moving transversally and back and forth at a defined speed the hard component bearing carriage (4) with respect to the continuous motion direction of the strip (6) is arranged so as to permit each carriage (4) to be driven separately, preferably by using a belt, a tooth belt, a cable or a rack.

15. A method for stoning or honing a metal strip (6) surface continuously moving at low speed, for the purpose of defect visual inspection, using the device according to anyone of the preceding claims, comprising the steps of:
- decreasing the strip moving speed from a standard speed to a value comprised between 1 and 20 meter per minute and preferably between 10 and 15 meter per minute ;
- moving the main frame (1) supporting the carriages (4) from a standby position to a starting working position ;
- for each carriage (4), moving the hard components (5) downwards to bring them into contact with the strip (6) using the respective drive systems (2) ;
- performing the stoning work by controllably moving the carriages (4) transversally with respect to the strip (6) movement, until a desired stoned portion of strip is obtained ;
- for each carriage, moving the hard components (5) upwards to pull the hard component (5) away of the strip (6) using the respective drive systems (2) ;
- moving the main frame (1) supporting the carriages (4) from the working position to the standby position ;
- possibly performing in standby position an automatic cleaning operation by wiping the hard components with a brush or unwoven material ;
- increasing again the strip (6) moving speed to standard speed.
